# EUROPEAN PATENT APPLICATION

(11) **EP 1 079 598 A2**
(43) Date of publication of application: **28.02.2001**
(21) Application number: 00118374.8
(22) Date of filing: 24.08.2000
(51) Int. Cl.: H04N 1/32, H04N 101/00

(54) **Electronic camera and method for adding information to image data**

(30) Priority: 27.08.1999 JP 24123499
(71) Applicant: Casio Computer Co., Ltd., Shibuya-ku, Tokyo (JP)
(72) Inventor: Murayama, Yoichi, Hamura R & D Center, Casio Compu, Hamura-shi, Tokyo 205-8555 (JP)
(74) Representative: Grünecker, Kinkeldey, Stockmair & Schwanhäusser Anwaltssozietät

(57) **Abstract**

Photographing information is acquired (S1) and converted into image data (S2), a fixed file name previously stored in a digital camera is fetched, a memory card (51) is searched (S3), and additional information written in a fixed file is converted to image data (S4, S5). After this, a Y component of the photographed image is extracted (S6), the photographed image which has been converted to image data is watermarked and then combined with the Y component (S7), the additional information which has been converted to image data is watermarked, then combined with the Y component (S8) and replaced by the Y component of the photographed image (S9). Thus, the photographing information and additional information are added as watermark data to the image.

## Description

In some of electronic cameras such as digital cameras, photographing information such as a photographing date acquired at the time of photographing is recorded at the time of recording of photographed image data and displayed together with an image at the time of reproduction.

Further, the electronic watermark technology for adding watermark information to photographed image data for protection of the copyright and prevention of falsification of the image data is developed.

It is relatively easy to add photographing information acquired at the time of photographing to an image photographed by use of an electronic camera such as a digital camera.

However, in the electronic camera in which much importance is given to the compactness thereof, since the number of operation keys is limited because of the physical restriction (size) and limitations put on the operation, it is difficult to add information (for example, the name and logo of the photographer, copy inhibition message or the like) other than photographing information because of limitations on the input operation.

In order to solve the above problem, input keys such as ten-keys may be provided on the digital camera, but in this case, the camera size is increased and the number of keys is increased, thereby causing the operability at the time of photographing to be lowered. In addition, it is less important to provide the keys used particularly for inputting information other than photographing information which has a less chance to be input and thus many problems occur if the input keys are provided.

According to a preferable aspect of this invention, an electronic camera having an imaging section comprises a storage medium constructed to be removably attached to a camera main body, for storing image data photographed by the imaging section and additional information to be added to the image data; an additional information searching section for searching for and fetching the additional information from the information stored in the storage medium; and an information adding section for adding the additional information searched for and fetched by the additional information searching section to the image data.

According to the above aspect, copyright information and personal information such as the name and logo of the photographer can be easily added without effecting the input operation even in an electronic camera in which the number of keys is limited.

Further, according to another preferable aspect of this invention, the storage medium further has identification information stored therein and the additional information searching section searches for the additional information based on the identification information.

According to the above aspect, additional information can be automatically searched for based on the identification information on the camera main body side and an additional information searching instructing operation by the user is not required. That is, the copyright information and personal information such as the name and logo of the photographer can be easily added without effecting the input operation of the additional information and searching instructing operation by the user.

Further, according to still another preferable aspect of this invention, that the electronic camera further comprises an identification information saving section for saving preset identification information and an identification information setting section for writing the identification information saved in the identification information saving section and the identification information is a fixed file name.

According to the above aspect, the user is not required to effect the setting operation of the identification information saving section such as a fixed file, for example, a file name input operation with respect to a new storage medium.

Further, according to another preferable aspect of this invention, the information adding section watermarks additional information and adds the same to the image data.

According to the above aspect, the name and logo of the photographer and the copyright information such as a copy inhibition message can be easily inserted into an image without effecting a special operation.

Further, according to still another preferable aspect of this invention, the additional information is information input and set by an external device on which the storage medium can be removably mounted.

According to the above aspect, it is not necessary to effect the operation for inputting additional information on the electronic camera side and the load of the user can be significantly alleviated in comparison with a case wherein the keys of the electronic camera are operated.

Further, another preferable aspect of this invention is characterized in that a method for adding information to image data in an electronic camera which includes an imaging section and a storage medium constructed to be removably attached to the main camera body, for storing image data photographed by the imaging section is to previously store additional information in a fixed file provided in the storage medium, fetch the additional information stored in the fixed file at the time of photographing and add the fetched additional information to image data photographed by the imaging section.

According to the above aspect, copyright information and personal information such as the name and logo of the photographer can be easily added without effecting the input operation even in an electronic camera in which the number of keys is limited.

Further, according to still another preferable aspect of this invention, a portable information terminal having a communicating section comprises a storage medium constructed to be removably attached to the main body of a portable information terminal, for storing image data received by the communicating section and additional information to be added to the image data; an additional information searching section for searching for and fetching the additional information from the information stored in the storage medium; and an information adding section for adding the information searched for and fetched by the additional information searching section to the image data.

According to the above aspect, copyright information and personal information such as the name and logo of the photographer can be easily added to image data obtained from the exterior.

Further, according to another preferable aspect of this invention, the storage medium further has identification information stored therein and the additional information searching section searches for the additional information based on the identification information in Claim 9.

According to the above aspect, the additional information can be automatically searched for based on the identification information on the main body side of the portable information terminal and the additional information searching instructing operation by the user is not necessary. That is, copyright information and personal information such as the name and logo of the photographer can be easily added without effecting the searching instructing operation and input operation of the additional information by the user.

Further, according to another preferable aspect of this invention, the portable information terminal further comprises an identification information saving section for saving preset identification information; and an identification information setting section for writing the identification information saved in the identification information saving section into the storage medium; and the identification information is a fixed file name.

According to the above aspect, it is not necessary for the user to effect the setting operation of the identification information saving section such as a fixed file, for example, the file name inputting operation with respect to a new storage medium.

Further, another preferable aspect of this invention is characterized in that the additional information is information input and Set by an external device on which the storage medium can be removably mounted.

According to the above aspect, it is not necessary to effect the operation for inputting additional information on the portable information terminal side and the load of the user can be significantly alleviated in comparison with a case wherein the keys of the electronic camera are operated.

This summary of the invention does not necessarily describe all necessary features so that the invention may also be a sub-combination of these described features.

The invention can be more fully understood from the following detailed description when taken in conjunction with the accompanying drawings, in which:
FIG. 1A is a diagram showing an example of the circuit construction of one embodiment (digital camera) of an electronic camera;
FIG. 1B is a functional block diagram of CPU 21 and CPU 81;
FIG. 2 is an explanatory diagram showing one embodiment of the layout of a storage area of a memory card;
FIG. 3 is an explanatory diagram showing one embodiment of a method for adding additional information to a photographed image;
FIG. 4 is a flowchart for illustrating one embodiment of the operation for adding information to image data according to this invention;
FIG. 5 is a flowchart for illustrating an example of an operation for automatically setting a fixed file for additional information into a memory card on the digital camera side;
FIG. 6 is a diagram showing an example of the circuit construction of a second embodiment of a portable information terminal; and
FIG. 7 is a flowchart showing a second embodiment of the operation for adding information to image data according to this invention.

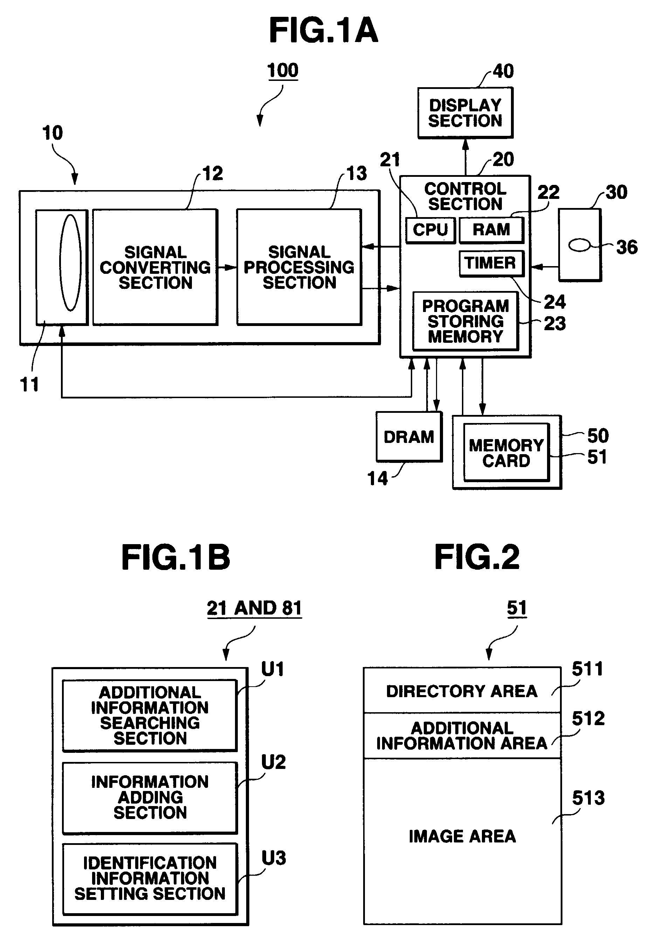

FIG. 1A is a diagram showing an example of the circuit construction of one embodiment (digital camera) of an electronic camera, and a digital camera 100 includes an imaging section 10, DRAM 14, control section 20, operating section 30, display 40 and storing section 50 (memory card 51).

The imaging section 10 converts a subject image fetched via an optical system 11 into digital data in a signal converting section 12, derives signal components (which are hereinafter referred to as image data) such as a digital luminance signal, color difference multiplex signals (Y, Cb, Cr data) from the digital data in a signal processing section 13 and transfers the image data to the DRAM 14. The signal processing section 13 reads out image data written in the DRAM 14 when the shutter is operated, subjects the image data to the JPEG compression process and stores the same into the memory card 51. Image data is reproduced by subjecting the image data read out from the memory (memory card) 51 at the time of reproduction to the expansion process.

The DRAM 14 is used as a work memory and an image buffer area for temporarily storing a photographed image and reproduced image, a work area used at the time of JPEG compression/expansion and the like are allocated therein.

The control section 20 has a microprocessor arrangement including a CPU 21, a RAM 22, a program storing memory 23 and peripheral circuit such as a timer 24, and the CPU 21 is connected to the above circuits and a power supply changeover switch (not shown) via a bus, for controlling the whole portion of the digital camera according to a control program stored in the program storing memory 23, fetching an information adding program based on this invention and various mode processing programs stored in the program storing memory 23 in response to a state signal from the operating section 30 to control the execution of various functions of the digital camera 100, for example, add additional information such as watermark information and the like to a photographed image and store the same at the time of photographing process and control the execution of the reproduction process of the stored image. In the program storing memory 23, constants and fixed file names as will be described later are stored in addition to the above various programs. The CPU 21 has functions of an additional information search section U1, an information adding section U2, and an identification information setting section U3 (the functional block diagram of which is shown in FIG. 1B).

The operating section 30 has keys and switches such as a processing mode changeover switch, function selecting button, shutter button 36 and the like as component parts and a state signal is transmitted to the control section 20 when one of the keys and switches is operated.

The storing section 50 is constructed such that a removable memory (small-sized storage medium such as a memory card, compact flash constructed to be removably attached to the camera main body: a memory card is used as an example thereof) 51 can be removably attached thereto and stores an image having additional information such as copyright information or the name and logo of the photographer added (combined) thereto into the memory card 51 at the time of photographing. Further, it fetches an image stored in the memory card 51 at the image reproducing time. A sensor such as a microswitch for detecting the attachment/removal state of the memory card is provided on the storing section 50 and an ON/OFF signal is transmitted to the control section 20 when the memory card 51 is attached or removed.

FIG. 2 is an explanatory diagram showing one embodiment of the layout of a storage area of the memory card 51. The memory card 51 comprises a directory area 511 for registering management information of various files stored in the memory card 51. More specifically, the directory area 511 stores file identification names and pointers of various files stored in the memory card 51. The memory card 51 further comprises an additional information area 512 for storing a fixed file (additional information file) for registering additional information such as the name, logo and copyright information, and an image area 513 for storing image files and preview image files and the like) are provided on the memory card 51. However, the above storing areas do not indicate the physical storage areas.

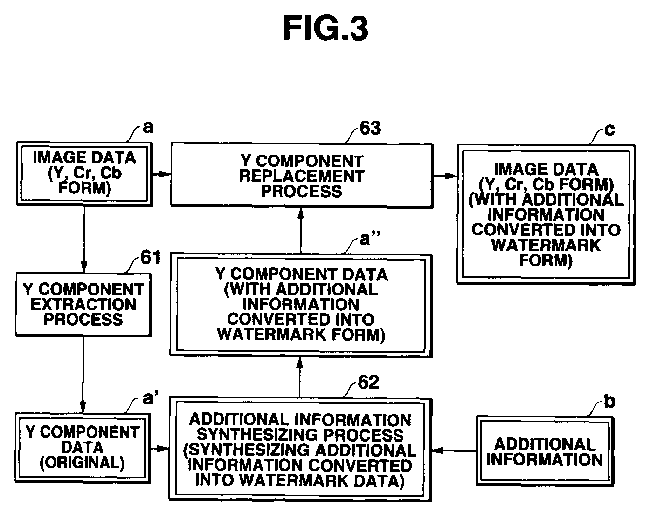

FIG. 3 is an explanatory diagram showing one embodiment of a method for adding additional information to a photographed image, and blocks 61, 62, 63 indicated by single-line frames indicate the processing operation by the digital camera 100, blocks a, a', a'' indicated by double-line frames indicate photographed image data and component data thereof, and a block b also indicated by a double-line frame indicates additional information. Further, a block c indicates a photographed image having additional information added (combined) thereto.

In FIG. 3, a subject image fetched by the digital camera 100 is converted to image data a in a Y, Cr, Cb form by the imaging section 10. Then, a Y component data a' is extracted from the image data a (Y, Cr, Cb) (Y component extracting process 61).

Next, additional information b such as the name and logo input from an external device such as a personal computer and stored in the additional information file stored in the additional information area of the memory card 51 is watermarked and the watermarked additional information is inserted into (combined with) the Y component data a' extracted by the Y component extracting process 61 to acquire the Y component data a'' to which the watermarked additional information is added (additional information combining process 62).

Next, the Y component data of the image data a (Y, Cr, Cb) is replaced by the Y component data a'' (Y component replacing process 63) and the image data c to which the watermarked additional information is added is acquired.

Watermarking of the additional information in the additional information combining process 62 is effected by decomposing and distributing the additional information into a preset format and if the additional information thus watermarked is combined with the Y component signal a' and used instead of the Y component of the image data a, the additional information cannot be visually sensed when the image data c obtained after the replacement is simply reproduced (in order to reproduce the additional information, it is necessary to execute an exclusive watermark reproducing program for reproducing the watermark information by collecting the watermark data distributed into the image data c by use of a format used when the additional information is watermarked). Further, the Y component extracting process 61, additional information combining process 62 and Y component replacement process are constructed by program modules, stored into a program storing memory 23 (as an information adding program) and the execution thereof is controlled by the control section 20 at the time of photographing (at the time of storing of the photographed image).

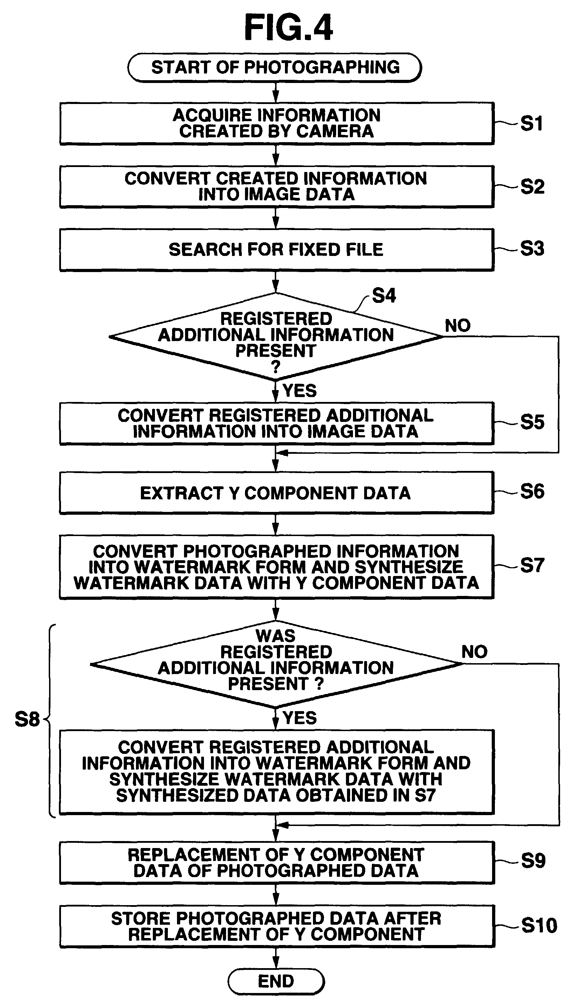

FIG. 4 is a flowchart for illustrating one embodiment of the operation for adding information to image data according to this invention.

### Step S1: (acquisition of camera-created information)

When the user operates the shutter button at desired timing, the photographing operation is started and the control section 20 acquires photographing information (character code string) such as the photographing date and the type of a device used for photographing.

### Step S2: (conversion of created information into an image data form)

Next, the control section 20 converts the photographing information (character code string) acquired in the step S1 into a character image and holds the same in a RAM 22 (or DRAM 14).

### Step S3: (searching for a fixed file)

The control section 20 checks the directory area 511 of the memory card 51 mounted on the digital camera 100, fetches the fixed file (name) stored in the program storing memory 23 and searches the memory card 51.

### Step S4: (determination of the presence or absence of registered additional information)

The control section 20 checks whether or not data (additional information) is written in the additional information area 512 which stores the fixed file of the fixed file name searched for in the step S3, and if it is written, it reads out the additional information, sets a registration flag into the ON state (the value = "1") and then effects the step S5. If data is not written, it sets the registration flag into the OFF state (the value = "0") and then effects the step S6.

### Step S5: (conversion of the registered additional information into an image data form)

Next, the control section 20 reads out registered additional information, converts the additional information (character code string or pattern) into a character image or pattern image and holds the converted image in the RAM 22 (or DRAM 14).

### Step S6: (extraction of the Y component data)

The control section 20 extracts Y component data from image data (Y, Cr, Cb) fetched into the DRAM 14 when the shutter button 36 is fully depressed.

### Step S7: (watermarking of photographing information and combination thereof)

Next, the control section 20 decomposes and distributes the photographing information stored in the RAN 22 (or DRAM 14) into a preset format to watermark and adds (combines) the thus obtained data to the Y component data extracted in the step S6.

### Step S8: (watermarking of registered additional information and combination thereof)

The control section 20 causes the process to proceed to the step S9 when the registration flag is OFF and decomposes and distributes the registered additional information stored in the RAM 22 (or DRAM 14) into a preset format to watermark and further adds (combines) the thus obtained data to the Y component data to which the watermark data (photographing information) is added in the step S7 when the registration flag is ON.

### Step S9: (replacement of the Y component)

Next, the Y component data of the photographed image data (Y, Cr, Cb) stored in the DRAM 14 is replaced by the Y component data to which the watermark data is added in the step S7 and/or step S8 to acquire photographed image data to which watermarked additional information is added.

### Step S10: (storing process of the image)

The control section 20 controls the signal processing section 13 so as to subject the photographed image data (= photographed image data having the additional information added thereto) having the Y component replaced in the step S9 to the JPEG compression process, stores the compressed image data in the memory card 51 and terminates the photographing operation.

With the above construction, copyright information and personal information which the user registers in the fixed file of the memory card can be watermarked and added to image data.

Further, in the above explanation, photographing information is also added as watermark information, but it is possible to omit the step S7 and watermark only the additional information and insert the same into the image data.

Further, in the above embodiment, a case wherein the photographing information and additional information are watermarked and added to (inserted into) the image data is explained as one example, but this invention is not limited to insertion of the watermark data and can be applied to a case wherein information is attached to the image or information is stored in correspondence to the image data.

Further, the fixed file for additional information is previously set in the memory card 51 used in this invention as described before, but a general memory card in which a fixed file for additional information is not previously set can be used.

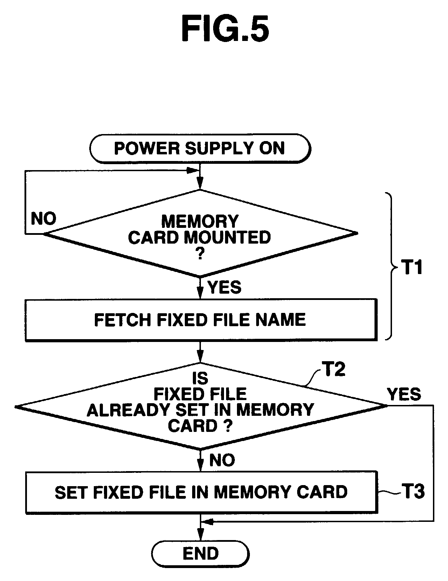

FIG. 5 is a flowchart for illustrating an example of an operation for automatically setting a fixed file for additional information into a memory card on the digital camera side.

### Step T1: (fetching of the fixed file name)

Since a memory card mounting signal is transmitted from an attachment/removal detecting sensor to the control section 20 if the user mounts the memory card 51 on the storing section 50 when the main power supply of the digital camera 100 is set in the ON state, the control section 20 fetches the fixed file name stored in the program storing memory 23 when receiving the memory card mounting signal.

### Step T2: (determination as to whether the fixed file is set or not)

Next, the control section 20 checks the directory area 511 of the memory card 51 to determine whether or not the fixed file name is set (that is, whether or not the same file as the fixed file name fetched in the step T1 is present in the additional information area 512). If the fixed file name is present in the directory area 511, it terminates the fixed file setting process.

### Step T3: (setting of the fixed file)

The control section 20 registers the fixed file name in the directory of the directory area 511 thereby allocating the fixed file in the additional information area 512.

Since the fixed file can be automatically set each time a new memory card is mounted if the fixed file name is registered in the digital camera 100 at the time of shipment by the above-described operation, it is not necessary for the user to effect the fixed file setting operation (additional information (for example, personal information such as a user name) can be input to the set fixed file by use of a personal computer or the like).

In the above flowchart, the timing at which the fixed file name is written into the memory card is set to the memory card mounting time (T1), but it may be set to the power supply turn-ON time or power supply turn-OFF time. Further, a function as a write instruction key is assigned to one of the function selecting buttons of the operation section 30 and the operation for writing the fixed file name may be started when the user operates the button.

Further, in the above embodiment, the fixed file is automatically set in the memory card based on the fixed file name previously stored on the digital camera 100 side. However, it is also possible for the user himself to input a fixed file name described in the instruction manual for the digital camera on the personal computer to set the fixed file for additional information and input additional information such as a pattern and the name and logo of the user to the set fixed file for additional information. Further, it is also possible to previously set a fixed file in a memory card itself which is not yet used.

In a case where the fixed file name stored in the main body of the digital camera 100 is written into the memory card 51 or where the user himself inputs the fixed file name to the memory card 51, a case wherein the fixed file name is not stored in the memory card 51 can be considered, and therefore, a step of determining whether the fixed file name is searched for is inserted after the step S3 in the flowchart of FIG. 4 and it is necessary to effect the step S4 when it is searched for and it is necessary to effect the step S6 when it is not searched for.

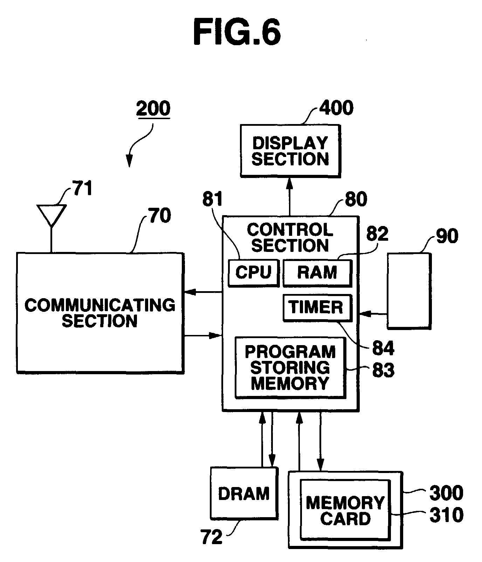

Next, a second embodiment of a portable information terminal is explained. FIG. 6 is a diagram showing an example of the circuit construction of a portable information terminal, and a portable information terminal 200 includes a communicating section 70, antenna 71, DRAM 72, control section 80, operating section 90, display section 400 and storing section 300 (memory card 310).

The communicating section 70 has wireless and wired interfaces to effect data reception/transmission, and image data received from the exterior is temporarily transferred to the DRAM 72 and the image data written in the DRAM 72 is stored in the memory card 310 when the saving operation is effected in the operating section 90. Further, image data fetched from the memory (memory card) 310 is reproduced at the reproducing time.

The DRAM 72 is used as a work memory and an image buffer area for temporarily storing a received image and an image to be transmitted is acquired therein.

The control section 80 has a microprocessor construction including a CPU 81, RAM 82, program storing memory 83 and peripheral circuit such as a timer 84. The CPU 81 is connected to the above circuits and a power supply changeover switch (not shown) via a bus, for controlling the whole portion of the portable information terminal according to a control program stored in the program storing memory 83. Furthermore, the CPU fetches an information adding program based on this invention and various mode processing programs stored in the program storing memory 83 in response to a state signal from the operating section 90 to control the execution of various functions of the portable information terminal 200. For example, the CPU adds additional information such as watermark information and the like to an image, stores the same at the image receiving time and controls the execution of the reproduction process of the stored image. In the program storing memory 83, constants and fixed file names as will be described later are stored in addition to the above various programs. The CPU 81 has functions of an additional information search section U1, an information adding section U2 and an identification information setting section U3 (a functional block diagram of which is shown in FIG. 1B).

The operating section 90 has keys and switches such as a processing mode changeover switch, function selecting button, touch panel and the like as component parts and a state signal is transmitted to the control section 80 when one of the keys, switches and touch panel is operated for inputting.

The storing section 300 is constructed such that a removable memory (small-sized storage medium such as a memory card, compact flash constructed to be removably attached to the main body of the portable information terminal: a memory card is used as an example thereof) 310 can be removably attached thereto and stores an image having additional information such as copyright information or the name and logo of the photographer added (combined) to the received image into the memory card 310. Further, it fetches an image stored in the memory card 310 at the time of image reproduction. A sensor such as a microswitch for detecting the attachment/removal state is provided in the storing section 300 and an ON/OFF signal is transmitted to the control section 80 when the memory card 310 is mounted or removed.

One example of the layout of the storage areas of the memory card 310 is the same as that shown in FIG. 2 and the explanation therefor is omitted.

A method for adding additional information to an image is simply effected by adding additional information as information data to image data in the case of the portable information terminal.

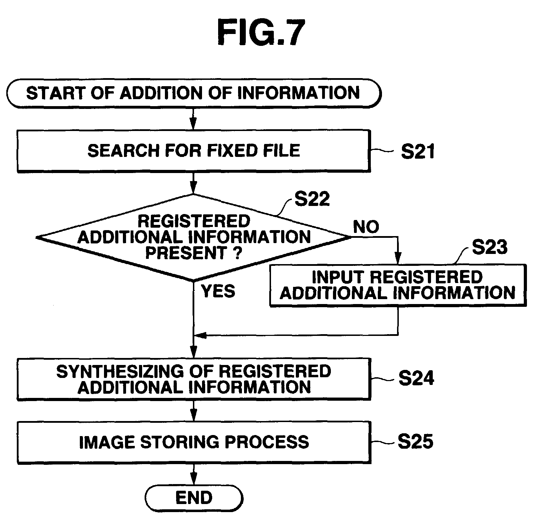

FIG. 7 is a flowchart showing a second embodiment of the operation for adding information to image data according to this invention. In FIG. 7, portions which are the same as those of the first embodiment are denoted by the same reference symbols.

### Step S21: (searching for a fixed file)

The control section 80 checks the directory area 511 of the memory card 310 mounted on the portable information terminal 200, fetches the fixed file (name) stored in the program storing memory 83 and searches the memory card 310.

### Step 22: (determination of the presence or absence of registered additional information)

The control section 80 checks whether or not data (additional information) is written in the additional information area 512 which stores the fixed file of the fixed file name searched for in the step S21, and if the data is written, it sets a registration flag into the ON state (the value = "1"), holds the additional information thereof in the RAM 82 (or DRAM 72), sets a readout registration flag into the ON state (the value = "1") and then effects the step S24. If the data is not written, it sets the registration flag into the OFF state (the value = "0") and effects the step 523.

### Step S24: (combination of the registered additional information)

The control section 80 effects the step S23 when the registration flag is set in the OFF state and adds registered additional information stored in the RAM 82 (or DRAM 72) to preset image data when the registration flag is set in the ON state.

### Step S23: (inputting of the registered additional information)

Since registered additional information is not present when the registration flag is set in the OFF state, the control section 80 causes additional information from the operating section 90 to be input.

### Step S25: (image storing process)

The control section 80 saves/stores image data (= image data having additional information added thereto) in the memory card 310 and terminates the process.

With the above construction, copyright information, personal information or the like which the user registers in the fixed file of the memory card can be added to image data.

Further, in the second embodiment, an example in which information is stored in correspondence to image data is explained, but this invention is not limited to addition of data, and it is possible to watermark information and combine the same with image data as explained in the first embodiment or attach information on the image.

Further, it becomes possible to add additional information to a photographed image or received image by providing the communicating section 70 in the digital camera as shown in the first embodiment and one device can be used in a manner as in the second embodiment in addition to a manner described in the first embodiment.

Further, the communicating section 70 is formed as an integral type in FIG. 6, but it can be formed as a removable device.

As described above, in the memory card 310 used in this invention, the fixed file for additional information is previously set, but it is possible to use a general memory card in which the fixed file for additional information is not previously set.

Further, an example of the operation for automatically setting the fixed file for additional information into the memory card on the portable information terminal side is the same as that shown in FIG. 5 and therefore the explanation therefor is omitted.

As described above, the embodiments of this invention are explained, but this invention is not limited to the above embodiments and can be variously modified without departing from the technical scope thereof.

## Claims

1. An electronic camera having an imaging section, characterized by comprising:
a storage medium (51) constructed to be removably attached to a camera main body, for storing image data photographed by the imaging section and additional information to be added to the image data;
an additional information searching section (U1) for searching for and fetching the additional information from the information stored in said storage medium; and
an information adding section (U2) for adding the additional information searched for and fetched by said additional information searching section to the image data.

2. The electronic camera according to claim 1, characterized in that said storage medium further has identification information stored therein and said additional information searching section searches for the additional information based on the identification information.

3. The electronic camera according to claim 2, characterized by further comprising an identification information saving section (23) for saving preset identification information; and an identification information setting section (U3) for writing the identification information saved in said identification information saving section into said storage medium.

4. The electronic camera according to claim 2, characterized in that the identification information is a fixed file name.

5. The electronic camera according to claim 3, characterized in that the identification information is a fixed file name.

6. The electronic camera according to claim 1, characterized in that said information adding section watermark the additional information and adds the watermarked data to the image data.

7. The electronic camera according to claim 1, characterized in that the additional information is information input and set by an external device on which said storage medium can be removably mounted.

8. A method for adding information to image data in an electronic camera which includes an imaging section (10) and a storage medium (51) constructed to be removably attached to the main camera body, for storing image data photographed by the imaging section, characterized by comprising the steps of:
previously storing additional information in a fixed file provided in the storage medium;
fetching the additional information stored in the fixed file at the time of photographing; and
adding the fetched additional information to image data photographed by imaging section.

9. A portable information terminal having a communicating section, characterized by comprising:
a storage medium (51) constructed to be removably attached to a portable information terminal main body, for storing image data received by the communicating section and additional information to be added to the image data;
an additional information searching section (U1) for searching for and fetching the additional information from the information stored in said storage medium; and
an information adding section (U2) for adding the information searched for and fetched by said additional information searching section to the image data.

10. The portable information terminal according to claim 9, characterized in that said storage medium further has identification information stored therein and said additional information searching section searches for the additional information based on the identification information.

11. The portable information terminal according to claim 10, characterized by further comprising an identification information saving section (23) for saving preset identification information; and an identification information setting section (U3) for writing the identification information saved in said identification information saving section into said storage medium.

12. The portable information terminal according to claim 10, characterized in that the identification information is a fixed file name.

13. The portable information terminal according to claim 11, characterized in that the identification information is a fixed file name.

14. The portable information terminal according to claim 9, characterized in that the additional information is information input and set by an external device on which said storage medium can be removably mounted.
